# FASCICULE DE BREVET EUROPEEN

(11) **EP 4 499 882 B1**
(45) Date de publication et mention de la délivrance du brevet: **18.11.2026**
(21) Numéro de dépôt: 23718659.8
(22) Date de dépôt: 24.03.2023
(51) Int. Cl.: C22B 1/00, C22B 3/14, C22B 11/00, C22B 25/06, C22B 58/00, B09B 3/80, B32B 38/10

(54) **PROCÉDÉ DE RÉCUPERATION DE L'INDIUM À PARTIR D'UN SUBTRAT COMPRENANT DE L'OXYDE D'INDIUM-ÉTAIN ET UNE COUCHE MÉTALLIQUE PAR VOIE DE CHIMIE VERTE**
VERFAHREN ZUR RÜCKGEWINNUNG VON INDIUM AUS EINEM SUBSTRAT MIT INDIUMZINNOXID UND EINER METALLSCHICHT MITTELS EINES GRÜNCHEMISCHEN VERFAHRENS
METHOD FOR RECOVERING INDIUM FROM A SUBSTRATE COMPRISING INDIUM TIN OXIDE AND A METAL LAYER BY MEANS OF A GREEN CHEMISTRY PROCESS

(30) Priorité: 24.03.2022 FR 2202629
(43) Date de publication de la demande: 05.02.2025
(73) Titulaire: Commissariat à l'Energie Atomique et aux Energies Alternatives, 75015 Paris (FR)
(72) Inventeur: BILLY, Emmanuel, 38054 Grenoble Cedex 9 (FR); GARCIA, Julie, 38054 Grenoble Cedex 09 (FR)
(74) Mandataire: Santarelli
(86) Numéro de dépôt international: PCT/FR2023/050420
(87) Numéro de publication internationale: WO 2023/180673

(56) Documents cités:
- US-A1- 2015 233 004
- ZHANG ZHEN ET AL: "Optimization of indium recovery from waste crystalline silicon heterojunction solar cells by acid leaching", SOLAR ENERGY MATERIALS AND SOLAR CELLS, ELSEVIER SCIENCE PUBLISHERS, AMSTERDAM, NL, vol. 230, 8 June 2021 (2021-06-08), XP086766465, ISSN: 0927-0248, [retrieved on 20210608], DOI: 10.1016/J.SOLMAT.2021.111218
- "Solar Panels and Photovoltaic Materials", 11 July 2018, INTECH, ISBN: 978-1-78923-435-0, article MARINA MONTEIRO LUNARDI ET AL: "A Review of Recycling Processes for Photovoltaic Modules", XP055609769, DOI: 10.5772/intechopen.74390
- YUAN ZIWEN ET AL: "Status and advances of deep eutectic solvents for metal separation and recovery", vol. 24, no. 5, 9 March 2022 (2022-03-09), GB, pages 1895 - 1929, XP055978599, ISSN: 1463-9262, Retrieved from the Internet <URL:https://pubs.rsc.org/en/content/articlepdf/2022/gc/d1gc03851f> [retrieved on 20220711], DOI: 10.1039/D1GC03851F

## Description

### DOMAINE TECHNIQUE

La présente invention se rapporte au domaine général du recyclage des panneaux photovoltaïque.

L'invention concerne plus particulièrement un procédé de récupération de l'argent à partir d'un panneau photovoltaïque, contenant par exemple des cellules photovoltaïques en silicium cristallin.

L'invention est particulièrement intéressante puisqu'elle permet de récupérer l'indium présent dans les cellules photovoltaïques par voie de chimie verte.

### ÉTAT DE LA TECHNIQUE ANTÉRIEURE

Le recyclage des panneaux photovoltaïques (PV) est devenu un enjeu majeur depuis le 13 août 2012 puisque, à cette date, la Directive relative aux Déchets d'Equipements Electriques et Electroniques (DEEE) a été étendue aux panneaux photovoltaïques (PV).

Les panneaux photovoltaïques comprennent généralement plusieurs cellules photovoltaïques enrobées dans un polymère, le tout étant disposé entre deux plaques, par exemple en verre. Les cellules photovoltaïques existantes peuvent, par exemple, être en silicium. A titre illustratif et non limitatif, une cellule en silicium à hétérojonction (HJT) peut comprendre un substrat en silicium monocristallin recouvert, de part et d'autre, par des couches de silicium amorphe (P et N+). Ces couches sont elles-mêmes recouvertes du film d'oxyde transparent conducteur (OTC) puis par une grille conductrice.

Ainsi, un module photovoltaïque avec des cellules photovoltaïques en silicium est donc majoritairement composé de verre (74% du poids total), d'aluminium (10%), de polymère (environ 6,5%) et de silicium (environ 3%). Les métaux (zinc, plomb, cuivre et argent) ne représentent qu'une part négligeable de la masse totale du panneau photovoltaïque.

Les objectifs minimaux de valorisation et de recyclage sont donc photovoltaïques aisément atteints par la seule récupération du verre et du cadre en aluminium.

Les procédés actuels se concentrent sur le démantèlement des modules par voie chimique ou thermique puis sur le recyclage des différents éléments grâce à des voies de retraitement spécialisées.

L'argent représente le métal constituant la plus forte valeur ajoutée (près de 90% de la valeur de la cellule). C'est pourquoi, la récupération de l'argent représente un enjeu majeur pour pérenniser la filière de recyclage.

Il est également intéressant de récupérer les plaques de silicium et les métaux des couches d'oxyde transparents conducteurs.

Pour cela, classiquement, les cellules photovoltaïques des modules photovoltaïques sont traitées chimiquement par dissolution totale des éléments métalliques (Cu, Ag, Sn, Pb, Al,..), des anti-réfléchissants et de la couche n-dopée pour récupérer le silicium. La dissolution peut être réalisée dans des bains de traitement composés de divers acides (par exemple, HF, HNO₃, H₂SO₄) concentrés seuls ou en mélange et souvent portés à ébullition.

Par exemple, le document CN 102 343 352 A décrit un procédé en plusieurs étapes permettant de récupérer des tranches de silicium sans endommager la couche antireflet ou la jonction PN. Le procédé se découpe en plusieurs étapes. D'abord, des solvants organiques tels que l'éthanol, l'acétone ou l'alcool isopropylique sont utilisés pour dissoudre la partie organique de la métallisation et ainsi la séparer de la tranche en silicium. Cette étape peut être mise en œuvre sous ultra-sons. Ensuite, de l'acide nitrique (concentration de 50 à 65 % massique) ou de l'acide sulfurique (concentration de 70 à 98 % massique) est utilisé pour enlever les résidus métalliques et de verre restants. Puis de l'acide chlorhydrique est utilisé pour enlever les ions métalliques. Enfin, un dernier nettoyage à l'acide fluorhydrique permet d'éliminer l'oxyde de silicium restant. Entre chaque étape, les cellules sont rincées à l'eau. Ainsi, la tranche de silicium peut être recyclée.

Le document US 2011/0083972 A1 décrit un procédé électrolytique pour le recyclage des éléments actifs, spécifiquement visant à retirer le revêtement d'oxyde conducteur transparent, par exemple en oxyde d'indium étain (ou ITO pour 'indium tin oxide'). Le substrat est immergé dans un bain acide (acide chlorhydrique ou acide sulfurique) ou basique (hydroxyde de sodium ou hydroxyde de potassium). Il est connecté à source de puissance DC, sur lequel est appliquée une tension pour qu'il agisse comme une cathode (électrode négative). Le potentiel cathodique génère des protons qui entraînent la dissolution de la couche. Le système est fermé avec une anode immergée dans la solution qui est reliée à la source de puissance. Ce procédé électrolytique ne s'intéresse pas à la récupération de l'argent. Le document US2015/233004 A1 divulgue un procédé de récuperation sélective de l'indium et de l'étain à partir de déchets d'ITO par dissolution et dépôts séquentiels.

Cependant, ces procédés présentent de nombreux inconvénients, notamment par la nature des bains chimiques et la complexité des procédés (nombreuses étapes).

C'est pourquoi, les travaux les plus récents mettent en œuvre des liquides ioniques pour dissoudre et/ou récupérer les éléments.

Récemment, il a été démontré qu'il est possible de réaliser la dissolution chimique et la récupération électrochimique de l'argent dans des liquides ioniques en présence d'un médiateur redox avec un procédé en deux étapes (EP 3178576 A1). Dans une première étape, l'argent est dissout dans une solution comprenant un liquide ionique et un médiateur redox. Cette solution assure la dissolution chimique de l'argent sous condition atmosphérique (air). Dans une seconde étape, l'argent est récupéré par électrolyse sous forme métallique. Simultanément au dépôt d'argent, le médiateur redox est régénéré dans le milieu liquide ionique.

Cependant, le procédé utilise des liquides ioniques qui sont couteux et qui ne sont pas biodégradables. De plus, ce procédé ne divulgue pas la récupération et la valorisation l'indium.

Actuellement, les procédés mis en œuvre pour la récupération de l'argent sont complexes, couteux, consommateurs de réactifs et/ou dangereux et, par conséquent, induisent un coût économique et environnemental important.

Ainsi, aucun des procédés actuels ne permet la récupération de l'argent et de l'indium de manière satisfaisante.

### EXPOSÉ DE L'INVENTION

Un but de la présente invention est de proposer un procédé de récupération de l'indium présent dans un substrat contenant de l'oxyde d'indium-étain et une couche métallique en un métal du groupe du platine ou en argent, le substrat provenant par exemple provenant d'un module photovoltaïque à recycler, le procédé devant être simple à mettre en œuvre, peu coûteux et ne nécessitant pas l'utilisation de produit toxique pour l'environnement et/ou pour la santé des personnes mettant en œuvre le procédé.

Pour cela, la présente invention comme défini par la revendication 1 propose un procédé de récupération de l'indium contenu dans un substrat comprenant un film d'oxyde d'indium-étain recouvert localement par une couche métallique, en argent ou en un métal du groupe du platine, le procédé comprenant une étape de dissolution au cours de laquelle on plonge le substrat dans une solution de dissolution comprenant un solvant eutectique profond choisi parmi la réline, la maline et l'oxaline, moyennant quoi on dissout sélectivement l'oxyde d'indium étain, la dissolution de l'oxyde d'indium-étain conduisant à la libération de la couche métallique.

L'invention se distingue fondamentalement de l'art antérieur par l'utilisation de solvants eutectiques profonds (ou DES pour « Deep Eutectic Solvents » en anglais). Les DES sont des solvants formés par le mélange de deux ou plusieurs composés en une proportion exacte qui correspond au point eutectique. La plupart de ces solvants sont liquides à température ambiante, ce qui facilite leur utilisation. Les DES sont non-volatiles, ininflammables et chimiquement stables à des températures allant jusqu'à 200 °C.

La synthèse des DES est facile et propre comparativement à celle des liquides ioniques qui ont besoin de plusieurs étapes de synthèse chimique et de purification. Les DES sont obtenus par simple mélange des produits composant le DES dans les bonnes proportions, éventuellement, avec chauffage du mélange, jusqu'à l'obtention d'un liquide homogène et transparent. Les DES sont formés d'un couple comprenant un donneur de liaison hydrogène et un accepteur de cette liaison.

La préparation des solvants ne nécessite aucune réaction chimique et, par conséquent, le rendement de production est de 100%. Il s'agit d'un simple mélange des produits composant le DES en bonne proportion avec chauffage, jusqu'à l'obtention d'un liquide homogène et transparent.

Les DES permettent de dissoudre la couche d'oxyde d'indium-étain et de récupérer la couche métallique sous forme solide par voie de chimie verte, contrairement aux procédés mettant en œuvre des liquides ioniques.

Selon un mode réalisation particulièrement avantageux, le solvant eutectique profond est l'oxaline.

Avantageusement, l'étape de dissolution est réalisée à une température comprise entre 20°C et 120°C, et de préférence entre 50°C et 80°C.

Avantageusement, le rapport solide liquide est compris entre 1 et 40%, et de préférence entre 10% et 20%.

Avantageusement, la solution de dissolution comprend en outre de l'eau, le pourcentage molaire de l'eau par rapport au solvant eutectique profond étant, de préférence, inférieur à 50%.

Selon un mode réalisation particulièrement avantageux, la couche métallique est en argent.

Avantageusement, le substrat comprend en outre un support, le film d'oxyde indium-étain étant disposé entre le support et la couche métallique, le support contenant du silicium ou du séléniure de cuivre, d'indium et de gallium (CIGS).

Avantageusement, le substrat est une cellule photovoltaïque ou un déchet de cellule photovoltaïque, par exemple une cellule à hétérojonction ou une cellule CIGS. La couche métallique, de préférence en argent, forme les collecteurs de courant. Le procédé permet de dissoudre sélectivement la couche d'ITO de la cellule photovoltaïque, par exemple une cellule en silicium à hétérojonction (HJT), ce qui désolidarise les collecteurs du corps de la cellule en silicium, sans dissolution d'éléments autres que la couche d'oxyde transparent conducteur en oxyde d'indium-étain.

Le procédé évite une dissolution non sélective des éléments et l'utilisation d'acides concentrés et dangereux. Par ailleurs cette dissolution est réalisée dans un solvant vert qui accepte de nombreux cycles de traitement, augmentant l'intérêt économique et environnemental. Cette approche permet de limiter les consommations en réactifs, évite l'utilisation de divers acides concentrés et réduit le nombre d'étapes.

Selon un mode de réalisation avantageux, le procédé comporte les étapes suivantes :
a) fournir un panneau photovoltaïque comprenant des câbles, une boîte de jonction, un cadre métallique, des cellules photovoltaïques encapsulées dans une couche de polymère et des connecteurs électriques,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques,
d) récupérer les cellules photovoltaïques, les cellules photovoltaïques formant un substrat contenant un film d'oxyde d'indium étain recouvert localement par une couche métallique, de préférence en argent,
e) mettre en œuvre l'étape de récupération de l'indium telle que définie précédemment.

Avantageusement, après l'étape de dissolution, le procédé comprend une étape ultérieure au cours de laquelle on récupère l'étain en mettant, par exemple, en œuvre une première étape d'électrodéposition de l'étain puis on récupère l'indium en mettant par exemple en œuvre une deuxième étape d'électrodéposition de l'indium.

Le procédé présente de nombreux avantages :
- le procédé ne nécessite pas d'utiliser de solution acide ni de liquide ionique,
- l'utilisation de DES (et sa réutilisation éventuelle) permet d'éliminer les étapes de traitement du solvant, ce qui réduit les coûts,
- les DES sont biodégradables, ce qui réduit les contraintes liés aux normes de sécurité et/ou environnementales,
- le procédé ne dégage pas de gaz nocifs et ne dégrade pas le milieu réactionnel,
- le procédé peut être réalisé sous condition atmosphérique (sous air),
- le procédé peut être réalisé à température ambiante (typiquement 25°C), ce qui évite l'apport d'énergie thermique,
- les DES sont des solvants peu chers, ce qui réduit les coûts du procédé,
- les DES sont faciles à préparer et peuvent donc être préparer *in situ,*
- l'argent n'est pas dissout et est ainsi facilement récupérable.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Les figures 1A, 1B et 1C sont des clichés photographiques d'une plaque d'une cellule à hétérojonction (HJT), respectivement, avant, pendant et après un traitement dans de l'Oxaline selon un mode de réalisation particulier de l'invention.
La figure 2 est un cliché obtenu au microscope électronique à balayage sur une plaque d'une cellule photovoltaïque HJT, avant traitement dans l'Oxaline.
La figure 3 est spectre EDX obtenu sur une plaque d'une cellule photovoltaïque HJT, avant traitement dans l'Oxaline ; le spectre EDX a été réalisé dans l'encadré de la figure 2.
La figure 4 est un cliché obtenu au microscope électronique à balayage sur une plaque d'une cellule photovoltaïque HJT, après traitement dans l'Oxaline, selon un autre mode de réalisation particulier de l'invention.
La figure 5 est un spectre EDX obtenu sur une plaque d'une cellule photovoltaïque HJT, après traitement dans l'Oxaline, selon un autre mode de réalisation particulier de l'invention ; le spectre EDX a été réalisé au niveau de la zone encadrée dans la figure 4.

### EXPOSÉ DÉTAILLÉ DE MODES DE RÉALISATION PARTICULIERS

Par la suite, même si la description fait référence à la valorisation de panneaux ou modules photovoltaïques ; l'invention est transposable à d'autres substrats contenant de l'oxyde d'indium-étain et une couche métallique en argent ou en un métal du groupe du platine (MGP).

Le procédé de recyclage d'un panneau photovoltaïque permettant de récupérer l'indium comprend les étapes suivantes :
a) fournir un panneau photovoltaïque,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques et les connecteurs électriques,
d) récupérer les cellules photovoltaïques, les cellules photovoltaïques formant un substrat contenant un film d'oxyde d'indium-étain recouvert localement par une couche métallique, et plus particulièrement par une couche contenant de l'argent,
e) mettre en œuvre une étape de récupération de l'indium.

Le panneau photovoltaïque à recycler comprend des câbles, une boîte de jonction et un cadre métallique, une couche de polymère (typiquement en éthyle vinyle acétate (EVA)), des connecteurs électriques et des cellules photovoltaïques.

Le procédé est plus particulièrement décrit pour un panneau photovoltaïque mais plusieurs panneaux photovoltaïques pourraient être traités simultanément.

La cellule photovoltaïque comprend un substrat avec divers éléments valorisables. En particulier, le substrat peut comprendre successivement un support, un film d'oxyde transparent conducteur (OTC ou TCO pour « transparent conductive oxide »), et une couche de métallisation recouvrant partiellement le TCO. Le film de TCO est ainsi accessible à la gravure.

Par la suite, nous décrirons plus particulièrement un substrat comprenant un support, un film d'oxyde transparent conducteur et une couche métallique. Cependant, le procédé peut également être mis en œuvre pour un substrat formé d'un film transparent conducteur et d'une couche métallique.

Les cellules photovoltaïques peuvent être en silicium cristallin, en silicium poly-cristallin, en CIGS ou encore en pérovskite.

On choisira, de préférence, une cellule à Hétérojonction (HJT).

A titre illustratif et non limitatif, la cellule HJT peut comprendre un substrat en silicium monocristallin recouvert, de part et d'autre, par des couches de silicium amorphe (P et N+). Les couches de silicium amorphes peuvent avoir une épaisseur d'une dizaine de nanomètres. Ces couches sont elles-mêmes recouvertes du film d'oxyde transparent conducteur puis par une grille conductrice.

Dans le cadre de l'invention, le film de TCO est un film d'oxyde indium-étain (ou ITO pour « Indium Tin Oxide »). L'ITO comprend par exemple 97% d'oxyde d'indium (In₂O₃) et 3% d'oxyde d'étain SnO₂.

La couche de métallisation forme une grille conductrice.

La couche de métallisation est une couche métallique en un métal du groupe du platine ou en argent.

Le métal du groupe du platine est choisi parmi le ruthénium, le rhodium, le palladium, l'osmium, l'iridium et le platine. De préférence, il s'agit de platine.

De préférence, la couche métallique est en argent. La couche métallique contient au moins 0,01% massique d'argent de la masse totale, et de préférence au moins 0,035 % massique d'argent.

La couche métallique peut être en argent pur (i.e. la couche contient au moins 99% d'argent). Elle est, par exemple, réalisée avec une pâte de métallisation en argent.

Alternativement, elle peut contenir un ou plusieurs autres éléments, par exemple, choisis parmi le plomb, l'étain et le cuivre. Les connecteurs sont, par exemple, formés d'un cœur en cuivre enrobé de Sn62Pb36Ag2.

Les étapes b) et c) permettent de séparer et désolidariser les cellules photovoltaïques ainsi que les connecteurs électriques contenant de l'argent des autres éléments du panneau photovoltaïque. Une fois les cellules photovoltaïques désolidarisées, elles sont avantageusement déconnectées les unes des autres et, éventuellement, des connecteurs électriques ne contenant pas d'argent.

A l'issue des étapes b) et c), les éléments d'intérêt du panneau photovoltaïque ont été séparés.

On récupère ainsi les cellules photovoltaïques (étape d).

Chaque cellule photovoltaïque représente un substrat contenant de l'indium et de l'argent à valoriser lors de l'étape e).

Lors de l'étape e), on réalise une étape de dissolution au cours de laquelle on plonge le substrat dans une solution de dissolution. La solution de dissolution comprend un solvant eutectique profond choisi parmi la réline, la maline et l'oxaline.

De manière générale, les DES peuvent être regroupés selon IV différentes familles :
- Type I : Sel quaternaire + Chlorure de métal
- Type II : Sel quaternaire + Chlorure de métal hydraté
- Type III : Sel quaternaire + Donneur de liaison d'hydrogène
- Type IV : Chlorure de métal hydraté + Donneur de liaison d'hydrogène

Les solvants eutectiques profonds sont, par exemple, à base de mélanges de sels d'ammonium quaternaire avec des donneurs de liaison hydrogène tels que des amines et des acides carboxyliques.

Avantageusement, le DES est le chlorure de choline en association avec un donneur de liaison H d'une très faible toxicité, comme le glycérol, l'éthylène glycol ou l'urée, ce qui garantit un DES non toxique et à très faible coût.

De préférence, le DES répond aux exigences de stabilité thermique (> 200 °C) et chimique (pas d'hydrolyse). Il est liquide à température ambiante ou au voisinage (< 100 °C) avec de nombreuses associations.

Selon une variante de réalisation avantageuse, le DES est un solvant eutectique profond naturel (ou NADES pour "Natural Deep Eutectic Solvents"). Il s'agit d'une sous-catégorie de DES à base de produits naturels pouvant être établie, ils possèdent le nom étant préparés en mélangeant des constituants naturels. On va retrouver des mélanges de type acides organiques, sucres, choline, urée, acides aminés.

On privilégie comme donneur de liaison hydrogène (HDB), les acides comme l'acide oxalique, carboxylique, malonique, l'urée, l'acide phenylpropionique. Ils seront, avantageusement, associés à un accepteur de liaison hydrogène (HBD) qui peut être un ammonium quaternaire et plus généralement la chlorure de choline (ChCl). On privilégiera le système Oxaline qui est le mélange ChCl/Acide oxalique en proportion 1:1. Ce dernier présente une excellente solubilité pour l'ITO.

L'introduction du substrat dans le DES entraîne la dissolution immédiate de l'oxyde transparent conducteur.

Cette étape évite l'émission de gaz (inflammabilité, volatilité) et/ou la dégradation de la solution.

L'étape de dissolution est réalisée à une température entre 15°C et 80°C, et de préférence entre 15°C et 40°C, par exemple à température ambiante, c'est-à-dire de l'ordre de 25°C. Il n'y a, avantageusement, pas besoin d'apport d'énergie thermique pour réaliser la dissolution du TCO. Toutefois, une augmentation de la température peut être, avantageusement, réalisée pour améliorer la vitesse de dissolution sans dégradation du milieu (pour des températures comprises entre 15 et 80°C).

Le rapport solide/liquide est compris entre 1% et 45%, et de préférence, le rapport solide/liquide est compris entre 1% et 30%. Ce ratio est noté S/L. Préférentiellement, le ratio S/L est de l'ordre de 10%. Par 10%, on entend 10%±1%. La phase solide correspond à la quantité de matériau utilisé lors de l'étape e). La phase liquide correspond au solvant eutectique profond. Ce ratio correspond à la masse de solide, en grammes, divisée par le volume de la solution, en millilitres. Ainsi, un ratio S/L compris entre 1% et 30% correspond à une concentration massique de l'oxyde métallique dans la solution acide compris entre 0,01 g/mL et 0,3g/mL. Pour des valeurs S/L inférieures à 1%, le rendement de dissolution est également élevé. Cependant, la quantité d'acide utilisée est considérablement élevée par rapport à la quantité de métal à dissoudre, et la quantité de réactifs perdus est conséquente.

L'argent n'est pas ou très peu dissous dans la solution de dissolution. On considère que la dissolution de l'argent est négligeable lors de cette étape. Il en va de même pour un métal du groupe du platine.

Optionnellement, la solution peut comprendre en outre un additif. Par exemple, il peut s'agir d'un agent desséchant, et/ou un agent favorisant le transport de matière (viscosité, conductivité ionique).

Par exemple, l'agent favorisant le transport de matière peut être de l'eau. Le pourcentage de l'eau par rapport au DES est, avantageusement, inférieur à 50% molaire, et de préférence de l'ordre de 10% molaire.

Selon une autre variante de réalisation, l'additif peut être la gamma-butyrolactone.

L'étape de dissolution peut être réalisée sous agitation.

Après dissolution de l'indium, la couche d'argent, sous forme, solide peut également être facilement extraite de la solution de dissolution.

L'étain dissout en solution peut être récupéré, par exemple par une première étape d'électrodéposition.

L'indium dissout en solution peut être récupéré par une deuxième étape d'électrodéposition.

Avantageusement, on récupérera d'abord l'étain puis l'indium.

L'homme du métier pourra choisir différentes techniques de séparation/récupération en fonction des éléments. Par exemple, il pourra choisir de mettre en œuvre : une étape de flottation ionique, de tamisage, de séparation électrostatique, de tamisage, d'extraction liquide/liquide avec l'utilisation d'un solvant insoluble au DES, plus spécifiquement des solvants avec de faibles polarités, de précipitation ou encore une étape de cémentation par du zinc.

La solution de dissolution est ensuite utilisable pour un nouveau cycle de traitement.

Alternativement, plusieurs substrats peuvent être successivement traités dans la solution de dissolution avant de mettre en œuvre les étapes d'électrodéposition.

### Exemples illustratifs et non limitatifs de modes de réalisation :

### Essai 1 : Dissolution d'ITO en milieu DES :

Des essais de dissolution ont été réalisés pour quatre DES : la Réline, la Maline, l'Ethaline et l'Oxaline. La dissolution est réalisée à 70 °C. Contrairement aux milieux aqueux acides cette température n'est pas contraignante vis-à-vis de dégagement d'espèces nocives. La durée de traitement est de 24 heures avec un rapport solide/liquide de 10%, avec une masse de poudre d'ITO (In₂O₃, SnO₂) de 543 mg.

Le tableau suivant répertorie les concentrations maximums d'indium et d'étain dissous à partir d'ITO pour différents DES. La concentration cible est un objectif théorique qui suppose le traitement de cellules HJT avec un rapport de 15%.

On observe une dissolution très importante en milieu Réline, en milieu Maline et en milieu Oxaline.

En revanche aucune dissolution de l'indium n'a été observée pour le milieu Ethaline.

Ces résultats démontrent l'excellente solubilité de la couche transparente dans certains DES. Les résultats avec l'oxaline sont remarquables.

Il a été possible de réaliser :
- en milieu Réline, le traitement successif de 10 batchs de cellules HJT,
- en milieu Maline, le traitement successif de 45 batchs de cellules HJT,
- en milieu Oxaline, le traitement successif de 149 batchs de cellules HJT.

**[Table 1]**

| Nature du DES | Concentration dissoute (g/L) | | Concentration cible pour une cellule HJT avec S/L=15% (g/L) | |
|---|---|---|---|---|
| | In | Sn | In | Sn |
| Réline (ChCl/Urée) 1:2 | 4,2 | 8,7 | 0,420 | 0,167 |
| Ethaline(ChCl/EthylèneGlycole)1:2 | 0 | 8,5 | 0,420 | 0,167 |
| Maline (ChCl/Acide malonique)1:1 | 19,3 | 8,6 | 0,420 | 0,167 |
| Oxaline (ChCl/Acide oxalique) 1:1 | 62,7 | 8,6 | 0,420 | 0,167 |

### Essai 2 : Traitement d'une cellule HJT en milieu DES - Oxaline :

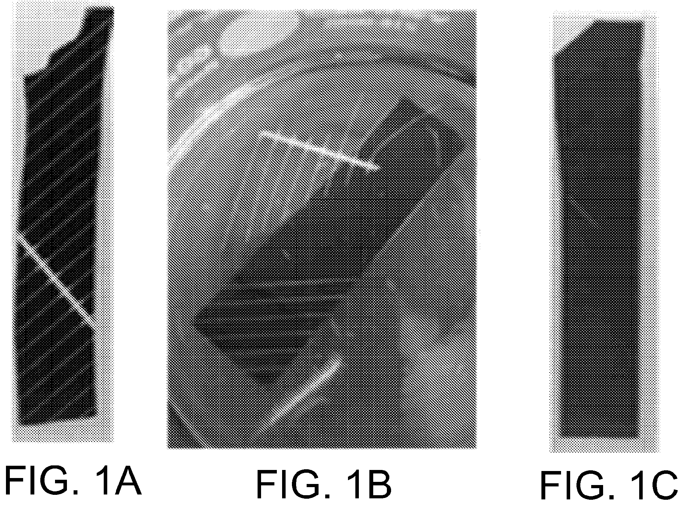

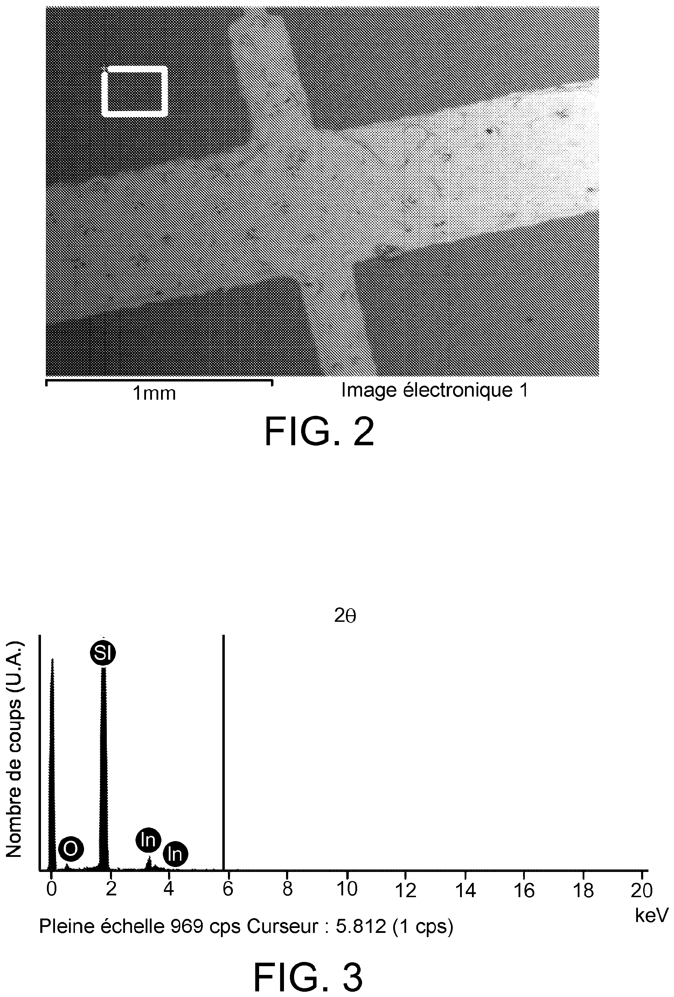

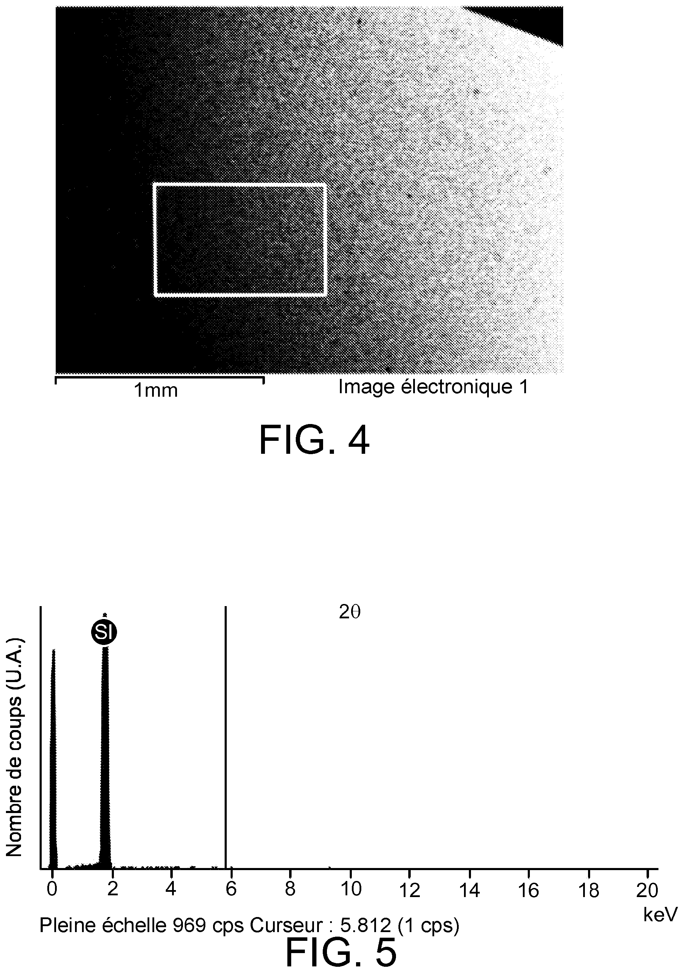

La dissolution sélective de l'ITO disposé entre le silicium et les connecteurs en argent de cellules HJT a été étudiée. Le traitement est réalisé en milieu Oxaline à 70 °C durant 4 heures, avec un volume de 10 mL de DES. Un morceau de cellule HJT est plongé dans le bain DES sous une agitation de 300 rpm. Avant traitement le morceau est intact (Figure 1A), pendant le traitement on observe le décollement des collecteurs en argent (figure 1B), et après le traitement l'absence des collecteurs (figure 1C). La dissolution de la couche sur laquelle repose l'argent provoque la séparation physique de l'argent et du silicium. Des mesures par MEB-EDX ont été réalisées avant et après le traitement (Figures 2 à 4). Avant traitement on mesure la présence d'indium (figures 2 et 3), et son absence après traitement (figures 4 et 5), ce qui confirme la dissolution de l'ITO en surface.

## Revendications

1. Procédé de récupération de l'indium contenu dans un substrat comprenant un film d'oxyde d'indium-étain recouvert localement par une couche métallique, en argent ou en un métal du groupe du platine, le procédé comprenant une étape de dissolution au cours de laquelle on plonge le substrat dans une solution de dissolution comprenant un solvant eutectique profond choisi parmi la réline, la maline et l'oxaline, moyennant quoi on dissout sélectivement l'oxyde d'indium étain, la dissolution de l'oxyde d'indium-étain conduisant à la libération de la couche métallique.

2. Procédé selon la revendication 1, **caractérisé en ce que** le solvant eutectique profond est l'oxaline.

3. Procédé selon l'une des revendications 1 et 2, **caractérisé en ce que** l'étape de dissolution est réalisée à une température comprise entre 20°C et 120°C, et de préférence entre 50°C et 80°C.

4. Procédé selon l'une quelconque des revendications précédentes, **caractérisé en ce qu'**un rapport solide liquide est compris entre 1 et 40%, et de préférence entre 10% et 20%.

5. Procédé selon l'une quelconque des revendications précédentes, **caractérisé en ce que** la solution de dissolution comprend en outre de l'eau, le pourcentage molaire de l'eau par rapport au solvant eutectique profond étant, de préférence, inférieur à 50%.

6. Procédé selon l'une quelconque des revendications précédentes, **caractérisé en ce que** la couche métallique est en argent.

7. Procédé selon l'une quelconque des revendications précédentes, **caractérisé en ce que** le substrat comprend en outre un support, le film d'oxyde indium-étain étant disposé entre le support et la couche métallique, le support contenant en outre du silicium ou du séléniure de cuivre, d'indium et de gallium (CIGS).

8. Procédé selon l'une quelconque des revendications précédentes, **caractérisé en ce que** le substrat est une cellule photovoltaïque ou un déchet de cellule photovoltaïque, par exemple une cellule à hétérojonction ou une cellule CIGS.

9. Procédé selon l'une quelconque des revendications précédentes, **caractérisé en ce qu'**il comporte les étapes suivantes :
a) fournir un panneau photovoltaïque comprenant des câbles, une boîte de jonction, un cadre métallique, des cellules photovoltaïques encapsulées dans une couche de polymère et des connecteurs électriques,
b) éliminer les câbles, la boîte de jonction et le cadre métallique du panneau photovoltaïque,
c) réaliser un traitement thermique, chimique et/ou mécanique pour retirer la couche de polymère encapsulant les cellules photovoltaïques,
d) récupérer les cellules photovoltaïques, les cellules photovoltaïques formant un substrat contenant un film d'oxyde d'indium étain recouvert localement par une couche métallique, de préférence en argent,
e) mettre en œuvre le procédé de récupération de l'indium tel que définie dans l'une des revendications 1 à 8.

10. Procédé selon l'une quelconque des revendications précédentes, **caractérisé en ce que**, après l'étape de dissolution, le procédé comprend une étape ultérieure au cours de laquelle on récupère l'étain en mettant, par exemple, en œuvre une première étape d'électrodéposition de l'étain puis on récupère l'indium en mettant par exemple en œuvre une deuxième étape d'électrodéposition de l'indium.

## Patentansprüche

1. Verfahren zur Rückgewinnung von Indium, das in einem Substrat enthalten ist, das einen Indium-Zinn-Oxid-Film umfasst, der lokal mit einer Metallschicht aus Silber oder einem Metall der Platingruppe bedeckt ist, wobei das Verfahren einen Auflösungsschritt umfasst, bei dem das Substrat in eine Auflösungslösung eingetaucht wird, die ein tief eutektisches Lösungsmittel umfasst, das aus Relin, Malin und Oxalin ausgewählt ist, wodurch das Indium-Zinn-Oxid selektiv aufgelöst wird, wobei die Auflösung des Indium-Zinn-Oxids zur Freisetzung der Metallschicht führt.

2. Verfahren nach Anspruch 1, **dadurch gekennzeichnet, dass** das tief eutektische Lösungsmittel Oxalin ist.

3. Verfahren nach einem der Ansprüche 1 und 2, **dadurch gekennzeichnet, dass** der Auflösungsschritt bei einer Temperatur zwischen 20 °C und 120 °C und vorzugsweise zwischen 50 °C und 80 °C durchgeführt wird.

4. Verfahren nach einem der vorhergehenden Ansprüche, **dadurch gekennzeichnet, dass** das Feststoff/Flüssigkeits-Verhältnis zwischen 1 und 40 % und vorzugsweise zwischen 10 % und 20 % liegt.

5. Verfahren nach einem der vorhergehenden Ansprüche, **dadurch gekennzeichnet, dass** die Auflösungslösung ferner Wasser umfasst, wobei der Molprozentsatz des Wassers im Verhältnis zu dem tief eutektischen Lösungsmittel vorzugsweise weniger als 50 % beträgt.

6. Verfahren nach einem der vorhergehenden Ansprüche, **dadurch gekennzeichnet, dass** die Metallschicht aus Silber besteht.

7. Verfahren nach einem der vorhergehenden Ansprüche, **dadurch gekennzeichnet, dass** das Substrat ferner einen Träger umfasst, wobei der Indium-Zinn-Oxid-Film zwischen dem Träger und der Metallschicht angeordnet ist, wobei der Träger ferner Silizium oder Kupfer-Indium-Gallium-Selenid (CIGS) enthält.

8. Verfahren nach einem der vorhergehenden Ansprüche, **dadurch gekennzeichnet, dass** das Substrat eine Photovoltaikzelle oder ein Photovoltaikzellenabfall ist, beispielsweise eine Heterojunction-Zelle oder eine CIGS-Zelle.

9. Verfahren nach einem der vorhergehenden Ansprüche, **dadurch gekennzeichnet, dass** es die folgenden Schritte umfasst:
a) Bereitstellen eines Photovoltaikmoduls, das Kabel, eine Anschlussdose, einen Metallrahmen, in einer Polymerschicht eingekapselte Photovoltaikzellen und elektrische Steckverbinder umfasst,
b) Entfernen der Kabel, der Anschlussdose und des Metallrahmens von dem Photovoltaikmodul,
c) Durchführen einer thermischen, chemischen und/oder mechanischen Behandlung, um die die Photovoltaikzellen einkapselnde Polymerschicht zu entfernen,
d) Zurückgewinnen der Photovoltaikzellen, wobei die Photovoltaikzellen ein Substrat bilden, das einen Indium-Zinn-Oxid-Film enthält, der lokal mit einer Metallschicht, vorzugsweise aus Silber, bedeckt ist,
e) Ausführen des Verfahrens zur Rückgewinnung von Indium gemäß einem der Ansprüche 1 bis 8.

10. Verfahren nach einem der vorhergehenden Ansprüche, **dadurch gekennzeichnet, dass** das Verfahren nach dem Auflösungsschritt einen nachfolgenden Schritt umfasst, bei dem Zinn zurückgewonnen wird, beispielsweise durch das Durchführen eines ersten Schritts der Elektroabscheidung von Zinn, und dann Indium zurückgewonnen wird, beispielsweise durch das Durchführen eines zweiten Schritts der Elektroabscheidung von Indium.

## Claims

1. Method for recovering indium contained in a substrate comprising an indium tin oxide film locally covered with a metal layer of silver or a metal of the platinum group, the method comprising a dissolving step during which the substrate is immersed in a dissolving solution comprising a deep eutectic solvent selected from among reline, maline and oxaline, whereby the indium tin oxide is selectively dissolved, the dissolving of the indium tin oxide leading to the release of the metal layer.

2. Method according to claim 1, **characterised in that** the deep eutectic solvent is oxaline.

3. Method according to either of claims 1 and 2, **characterised in that** the dissolving step is carried out at a temperature of between 20°C and 120°C and preferably between 50°C and 80°C.

4. Method according to any one of the preceding claims, **characterised in that** the solid to liquid ratio is between 1 and 40% and preferably between 10% and 20%.

5. Method according to any one of the preceding claims, **characterised in that** the dissolving solution further comprises water, the molar percentage of water with respect to the deep eutectic solvent preferably being less than 50%.

6. Method according to any one of the preceding claims, **characterised in that** the metal layer is made of silver.

7. Method according to any one of the preceding claims, **characterised in that** the substrate further comprises a carrier, the indium tin oxide film being disposed between the carrier and the metal layer, the carrier further containing silicon or copper indium gallium selenide (CIGS).

8. Method according to any one of the preceding claims, **characterised in that** the substrate is a photovoltaic cell or photovoltaic cell waste, for example a heterojunction cell or a CIGS cell.

9. Method according to any one of the preceding claims, **characterised in that** it comprises the following steps:
a) providing a photovoltaic panel comprising cables, a junction box, a metal frame, photovoltaic cells encapsulated in a polymer layer and electrical connectors,
b) removing the cables, junction box and metal frame from the photovoltaic panel,
c) carrying out a thermal, chemical and/or mechanical treatment to take off the polymer layer encapsulating the photovoltaic cells,
d) recovering the photovoltaic cells, the photovoltaic cells forming a substrate containing an indium tin oxide film locally covered with a metal layer, preferably of silver,
e) performing the method for recovering indium as defined in one of claims 1 to 8.

10. Method according to any one of the preceding claims, **characterised in that** after the dissolving step, the method comprises a subsequent step during which the tin is recovered by performing for example a first step of electrochemically depositing tin, then the indium is recovered by performing for example a second step of electrochemically depositing indium.
